# EUROPEAN PATENT SPECIFICATION

(11) **EP 0 275 990 B1**
(45) Date of publication and mention of the grant of the patent: **07.04.1993**
(21) Application number: 88100773.6
(22) Date of filing: 20.01.1988
(51) Int. Cl.: G05D 23/19, H05B 6/12, F24C 7/02

(54) **Heating cooking apparatus**
Kochgerät
Appareil de cuisson

(30) Priority: 22.01.1987 JP 12897/87; 22.01.1987 JP 12898/87
(43) Date of publication of application: 27.07.1988
(73) Proprietor: MATSUSHITA ELECTRIC INDUSTRIAL CO., LTD., Kadoma-shi, Osaka-fu, 571 (JP)
(72) Inventor: Tamura, Haruhisa, Nara-shi (JP); Yamazaki, Takahiko, Nara-shi (JP); Hasegawa, Mitsuhiro, Oizumi Sakurai-shi (JP)
(74) Representative: Patentanwälte Leinweber & Zimmermann

(56) References cited:
- EP-A- 0 024 798
- EP-A- 0 123 970
- EP-A- 0 208 442

## Description

The present invention relates to a cooking method according to the precharacterizing clause of claim 1 and to an apparatus for carrying through said method.

A prior art method and apparatus of the before- referenced type are known from EP-A2-0 024 798. This prior art method and apparatus are designed for microwave cooking in which heating is performed by irradiating microwave power to the food object. In this method and apparatus the detected temperature is the surface temperature of the food object measured by an infrared sensor, and the microwave power source is switched off for a predetermined period of time when the detected surface temperature reaches a level which corresponds to a predetermined level which is preset at the beginning of the cooking process. The intermittent irradiation of microwave power by switching on and off the microwave power source is continued until the decrease of the detected temperature level during the off-period remains below a predetermined temperature difference. Subsequently the microwave power is continually irradiated and the termination time of the cooking process is determined in dependence on the time period which is needed to increase the release of humidity from the food object within the heating chamber.

Due to the recent popularization of the heating cooking apparatus such as ovens/ranges, the making of confections such as cakes, cookies and chous in an oven has come increasingly into home rapidly. In addition, due to the recent liking for gourmandism, importance has been attached to the finish of food and the speed-up of cooking time.

However, the cooking of such cakes, cookies, chous, etc., has been susceptible to the heating temperature and thus there has been a tendency that their finish is deteriorated extremely if a given baking temperature is exceeded (this phenomenon is hereinafter referred to as an overshooting). The reason is that when an overshooting occurs, the food is baked at a temperature higher than its essential optimum baking temperature so that the surface of the food is baked first and its water content is not taken up, thereby cooking the food rather rare.

To prevent such overshooting, it has been the usual practice in the past to effect a blank baking until the inner temperature of the heating chamber attains the desired baking temperature before an object to be heated is placed inside the heating chamber (This operation is hereinafter referred to as a preheating operation).

However, the preheating requires a considerable time and also the energy is wasted. In addition, there is another disadvantage that even though the preheating is effected, if the placing of the object inside the heating chamber takes time, the internal temperature of the heating chamber drops thereby causing an overshooting.

As a countermeasure, a method has been proposed which eliminates the preheating to prevent any overshooting. This method is so designed that in addition to a conventional first sensor for detecting the temperature in a heating chamber to control the on-off operations of a heater, a second sensor is mounted near the heater to detect the temperature of the heater itself to compensate a delay in the thermal response of the conventional sensor, thereby eliminating the occurrence of overshooting.

However, this construction has the following disadvantages. Firstly, the second sensor must be arranged in the vicinity of the heater and therefore it must be excellent in high temperature characteristic thus making it much expensive. Another disadvantage is that the second sensor must be brought into complete close contact with the heater thus requiring a complicated mounting structure and deteriorating the mounting performance. Still another disadvantage is that the construction tends to be subjected to the effect of an external air, the heat of a lamp for illuminating the interior of the heating chamber, etc. In addition, although excellent in high temperature characteristic, the second sensor or thermistor is not suited for the control of the heating chamber temperature and its use along with the conventional thermistor results in an increase in the cost.

In view of this background in the prior art it is an object of the present invention to provide a cooking method according to the precharacterizing clause of claim 1 which is designed for heating cooking to safely prevent any overshoot of the actual cooking temperature over the preset temperature level, and to provide for an apparatus for carrying out the method which is simple constructed and cheap as regards manufacturing and assembling costs.

According the invention the above object is achieved by the cooking method characterized in claim 1 and the apparatus of claim 11 respectively.

In the cooking apparatus according to the invention a sensor of the type used in a conventional heating cooking apparatus is utilized in such a manner that the change in the resistance of the sensor due to a temperature change is converted to a level representing the corresponding voltage change (hereinafter referred to as a sensor level) and this sensor level is utilized along with a level corresponding to a preset temperature or a level so selected that heat sources are turned on when the sensor level is less than this level and the heat sources are turned off when this level is exceeded by the sensor level (the level is hereinafter referred to as a temperature adjusting level) so as to eliminate the occurrence of any overshooting irrespective of the presence or absence of a preheating, that is, at various starting temperatures as well as in various use conditions including one where the door is opened during the cooking and another where the cooking is interrupted due to an erroneous operation, thereby ensuring the best cooking result.

### BRIEF DESCRIPTION OF THE DRAWINGS

Fig. 1 is a perspective view showing the body of a heating apparatus according to an embodiment of the invention.
Fig. 2 is a block diagram showing a system construction of the embodiment.
Fig. 3 is a block diagram showing a system construction used in experiments conducted to derive an expression.
Fig. 4 is a time chart showing the variation in sensor level, heating chamber temperature and heat source output of the system construction of Fig. 3.
Fig. 5 is a time chart showing the variations in sensor level, heating chamber temperature and heat source output of the heating apparatus according to the embodiment of the invention.
Fig. 6 is a time chart for the apparatus of Fig. 5.
Fig. 7 is a time chart for the apparatus of Fig. 5.
Fig. 8 is a flow chart for the apparatus of Fig. 5.

### DESCRIPTION OF THE PREFERRED EMBODIMENTS

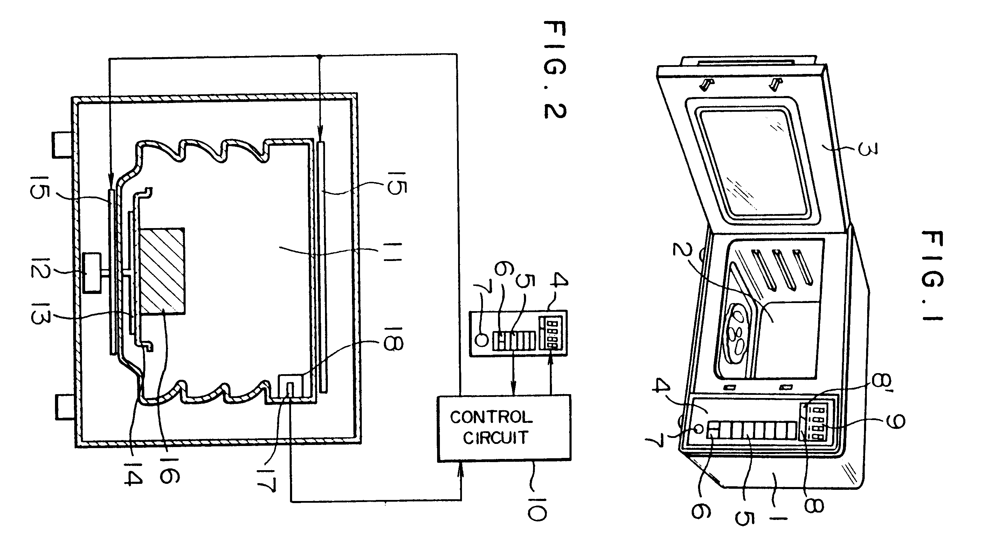

Referring to Fig. 1, there is illustrated a perspective view showing the body of a heating apparatus for cooking according to an embodiment of the invention. A body 1 includes a door 3 disposed to cover an opening 2 to open and close it, and a control panel 4. Arranged on the control panel 4 are input means including oven keys 5 for heating and cooking purposes, temperature setting keys 6, a timer volume 7 for setting a heating time, a cooking start key 8, and a clear key 8' for clearing inputted data. Numeral 9 designates an indicating window for indicating the data inputted through the input means.

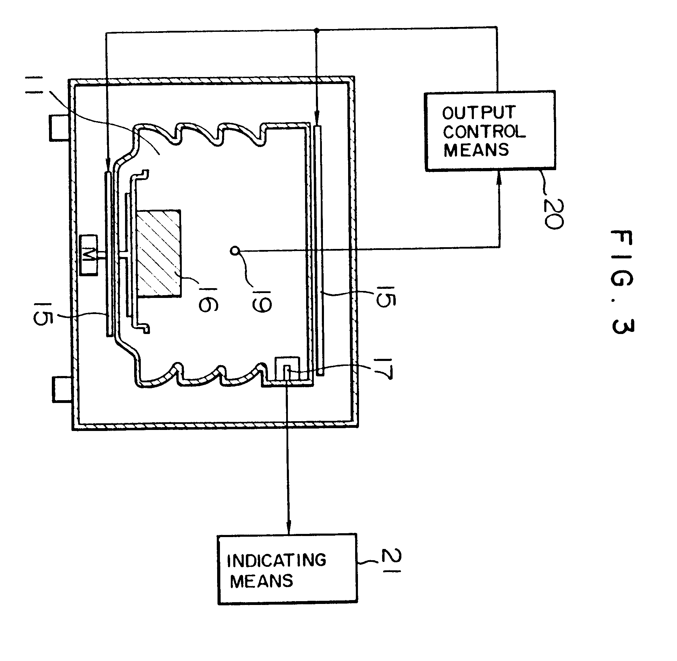

Referring to Fig. 2, there is illustrated a block diagram showing a system construction of the heating cooking apparatus. The control panel 4 includes a control circuit 10 constructed by a microcomputer or the like.

Numeral 11 designates a heating chamber in which a tray 14 is mounted on a turn table 13 rotated by a motor 12. A heat source including a flat heater 15 is mounted in each of the upper and lower parts of the heating chamber 11 to heat an object 16.

Also, an atmospheric thermistor 17 as a sensor for detecting the heating chamber temperature is arranged on one side of the heating chamber 11 so that when the chamber temperature changes, the resistance of the atmospheric thermistor 17 changes. This change is transmitted to the control circuit 10 so that when the preset temperature inputted by means of the oven keys 5 and the temperature setting keys 6 of the control panel 4 is reached, the flat heaters 15 are turned on or off to control the chamber temperature at the preset temperature. The atmospheric thermistor 17 is enclosed by a cover 18 to protect it from dirt and damages.

How the formula used with the invention has been derived will now be described first.

Referring to Fig. 3, there is illustrated a block diagram of a heating apparatus used for conducting experiments. An object 16 to be heated is placed inside a heating chamber 11 and a thermocouple 19 is arranged in the upper part of the heating chamber 11 so as to measure the chamber temperature. In response to the temperature measured by the thermocouple 19, output control means 20 controls flat heaters 15 forming heat sources. Also, a thermistor 17 always indicates a sensor level through indicating means 21.

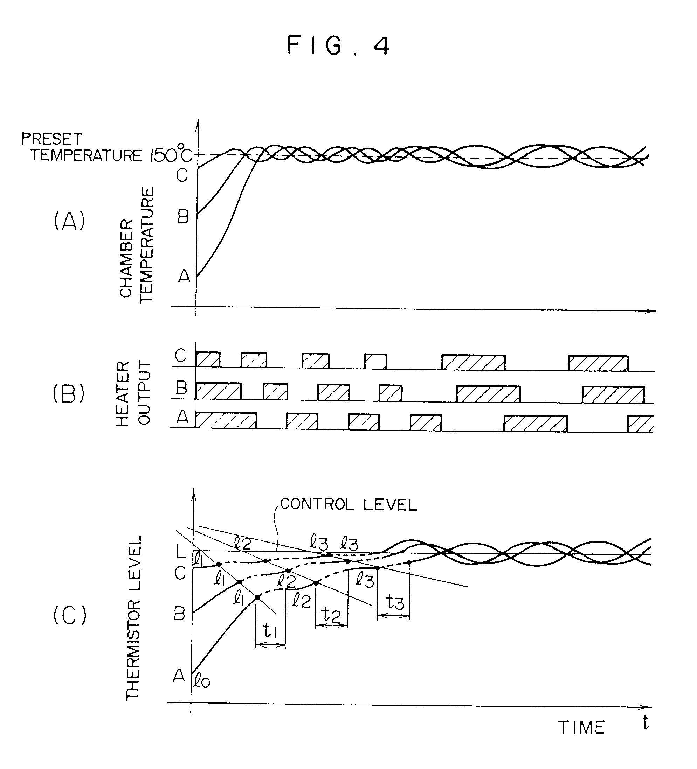

Fig. 4 shows time charts obtained when cakes were cooked with a preset temperature of 150°C. Shown in (a) of Fig. 4 are variations with time of the chamber temperature measured by the thermocouple 19. Shown in (b) are variations in the output of the flat heaters 15 forming heat sources. Shown in (c) are variations with time of the sensor level read from the indicating means 21. In these Figures, symbols A, B and C show the variations due to the differences in starting temperature within the heating chamber. The case A corresponds to the ordinary cold condition of the heating chamber 11 without any preheating and the internal temperature of the heating chamber 11 is increased in order of the cases B and C.

Since the ambient temperature of the object 16 is measured by the thermocouple 19 to control as shown in (a) of Fig. 4, it is possible to perform an ideal control free of any overshooting irrespective of the starting temperature used. The graph of (c) shows the resulting sensor levels. At the broken line portions, the control level is not reached but the heat-source flat heaters 15 are turned off.

Conversely, if a control is effected in such a manner that the heat-source flat heaters 15 are turned off before the sensor level reaches the control level as shown in (c) of Fig. 4, an ideal control without any overshooting can be effected as shown in (a) of Fig. 4. From an examination of the graph of (c) it will be seen that there is regularity for the sensor levels in (ℓ₁, 1₂, 1₃) at which the heat sources are turned off. This means that if the starting temperature is varied as the cases A, B and C, the lines connecting the resulting levels ℓ₁ , 1₂ and 1₃, respectively, can each be represented by a linear function. While Fig. 4 shows the characteristic diagrams obtained in the cases where cakes were cooked, the same results can be obtained in the case of other menus such as cookies and chous. Derived from this graph is an equation in ₌ ℓ₀ ⁺ Kₙ• (L-ℓ₀) (ℓ₀ = the lowest point level after starting, L = the control level, K = a constant). In the conditions of the case A, for example, the resulting levels ℓ₁, 1₂ and ℓ₃ from the initial level ℓ₀ through calculation of the above equation show values which approximate the ideal value so that if the heat sources are turned off for ti , t₂ and t₃ seconds, respectively, when the sensor level reaches the level ℓ₁ , 1₂ and 1₃, respectively, there results a graph without any overshooting as shown in (a) of Fig. 4. The similar experiments have been conducted for the cases B and C showing the occurrence of no overshooting as with the case A. Also, with other starting temperatures than those of the cases A, B and C, the resulting levels in ℓ₁, 1₂ and 1₃) from the above equation ℓₙ = ℓ₀ ⁺ Kₙ • (L - ℓ₀) all lie on the previously mentioned linear- function straight lines. Note that the initial setting is made in a manner that the slope of such straight line becomes more gentle as the number of turn-off operations increases.

In this case, while a more precise control can be effected by selecting the value of n greater, this increases the number of turn-off operations with the resulting increase in the cooking time. Although varying with different kinds of heating cooking apparatus, the experiments have shown that the best condition is obtained without increasing the cooking time when the number of turn-off operations is on the order of 3 to 5. Also, while the constant K is one determined by the kind of an object 16 to be heated which is placed in the heating chamber 11 so that in the case of automatic cooking the control can be effected with a greater accuracy by using a separate constant K for each of the different menus, e.g., cakes, cookies and chous, in the case of the heating cooking apparatus employing the ordinary manual, satisfactory results can be obtained even if the common constant K is used for the different temperature ranges.

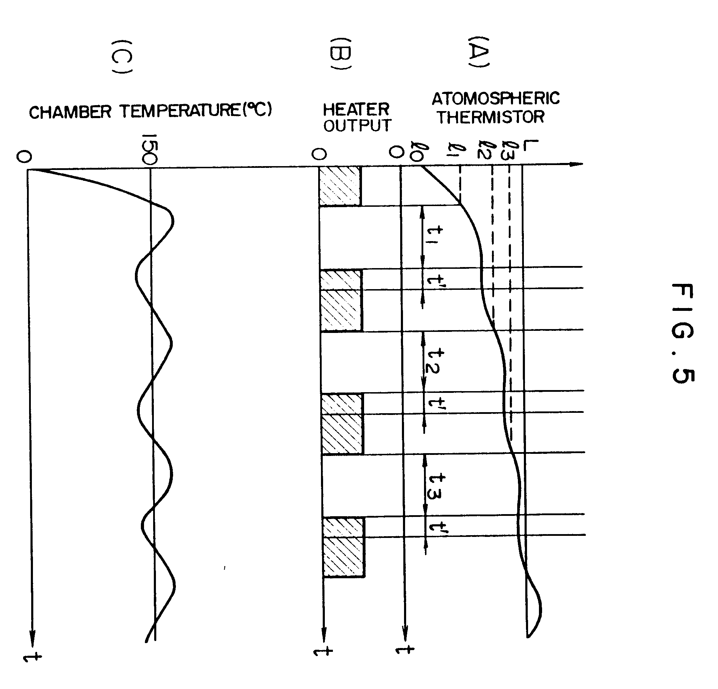

Referring now to Fig. 5, there are illustrated time charts showing the manner in which the control of the invention is effected when the preset temperature is 150 ° C. Show in (A) is the variation of the atmospheric thermistor level with time, and shown in (B) is the variation in the output of the heat sources. Shown in (C) is the variation of the chamber temperature with time.

After the cooking has been started, the control circuit 10 always reads the sensor level of the chamber temperature detected by the atmospheric thermistor 17. Then, the control circuit 10 stores a sensor level ℓ₀ attained at the time of the sensor level reaching the lowest point to perform the calculation of in = ℓ₀ + Kₙ• (L - ℓ₀) (n = 1, 2, 3). Here
1₀ = the lowest sensor level after starting
L = level corresponding to a Preset heating temperature
Kₙ = the coefficient determined by food

In the case of this embodiment which turns the heat sources off for tₙ seconds upon reaching the level in determined from the equation as mentioned above, for the preset temperature of 150 ° C there are the three preset values of Kₙ or K₁ = 0.6, K₂ = 0.84 and K₃ = 0.99 and therefore the heat sources or the flat heater 15 are turned off for t₁ = 90 sec, t₂ = 90 sec and t₃ = 90 sec at the levels ℓ₁ , ℓ₂ and 1₃, respectively.

However, at the instant that the level of the atmospheric thermistor 17 attains the temperature adjusting level L, the control is stopped immediately thereby shifting to the conventional control of the atmospheric thermistor 17.

In this case, however, if the cooking starting temperature is high as immediately after the preheating or in the case of a continuous cooking, that is, when the value of ℓ₀ is close to the value of L in the range ℓ₀ < L, the levels ℓ₁, , 1₂ and ℓ₃ obtained from the equation become close to one another. For instance, where L = 100, K₁ = 0.7, K₂ = 0.8 and K₃ = 0.9, if ℓ₀ = 90, then ^{ℓ}1, = 97, ℓ₂ = 98 and ℓ₃ = 99 so that the level 1₂ is reached during the turn-off for t₁ seconds at the level ℓ₁, and the turn-off takes place continuously for the period of (t₁ + t₂) seconds, thereby causing an overshooting at the level 1₃. To prevent it, the heat sources are forcibly turned on for t' seconds after the off period. It has been shown by experiments that this probelm can be overcome by turning the heating sources on for about t' = 30 seconds.

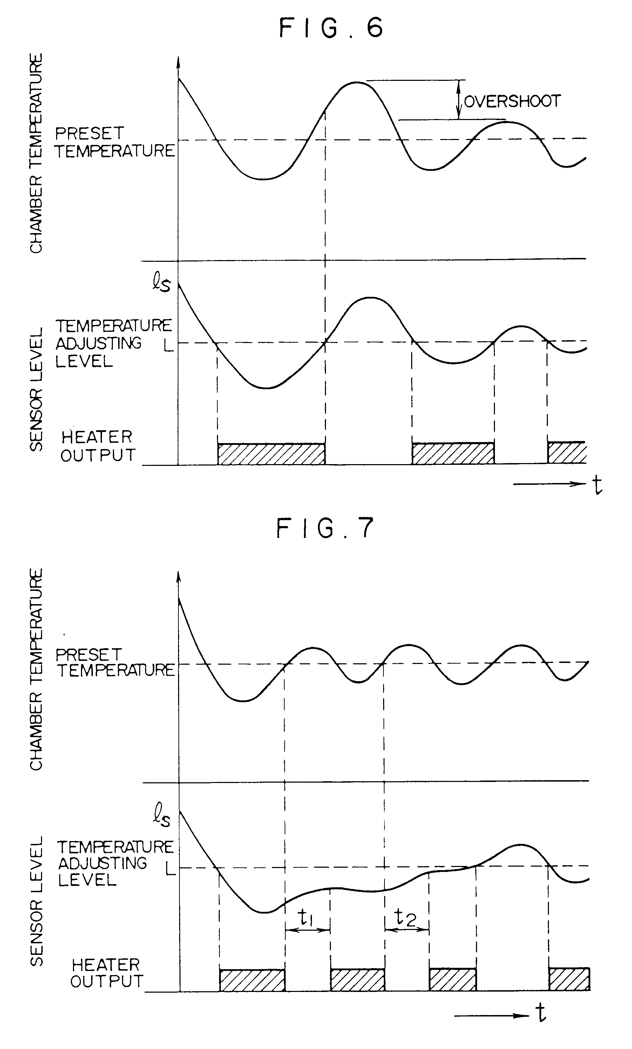

Also, in the case of a continuous cooking or the like, if, for example, the second cooking temperature is lower than the first cooking temperature, there results ℓₛ L L so that the sensor level is already higher than the temperature adjusting level and the heating sources are off from the start, where is denotes the sensor level at the start of cooking. In such a case, if the control is stopped upon reaching the temperature adjusting level as shown in Fig. 4, an overshooting is caused as shown in Fig. 6. Thus, where ℓₛ ≧ L, the occurrence of such overshooting can be prevented as shown in Fig. 7 by starting the control at the time where the level has the value of to < L.

On the other hand, after the cooking has been started, if the cooking is interrupted due to the opening of the door 3 or the cancellation or if the preset temperature is changed by the temperature setting keys 6 of the control panel 4 thus requiring to start the cooking again, the control is not continued since this is equivalent to starting the cooking in a condition where the inner temperature of the heating chamber 11 is high. Thus, after the cooking has been restarted, the lowest-point level to is ②detected thereby repeating the control.

By performing the control in this way, it is possible to eliminate the occurrence of any overshooting of the heating chamber temperature in all the cases of cooking with or without a preheating, continuous cooking, cooking interrupted by any erroneous operation of the user, such as, the opening of the door 3 or the depression of the clear key 8' in the course of the cooking and so on, thereby ensuring the optimum result or finish of food.

Now considering temperature ranges in which the control is to be effected, while the control should preferably be effected in all the temperature ranges of the heating cooking apparatus, in consideration of the capacity problem of the microcomputer of the control circuit 10 and the existence of menus whose results are not much affected by the occurrence of any overshooting, the microcomputer capacity can be decreased by limiting the control particularly to cooking temperature range of 150 to 180°C for such confections as cakes, cookies and chous which are subject to the effect of any overshooting.

While, in the embodiment of the invention, the heating sources including the flat heaters are used, the invention is equally applicable to all other heating apparatus including those employing sheathed heaters and others of the hot-air circulation type.

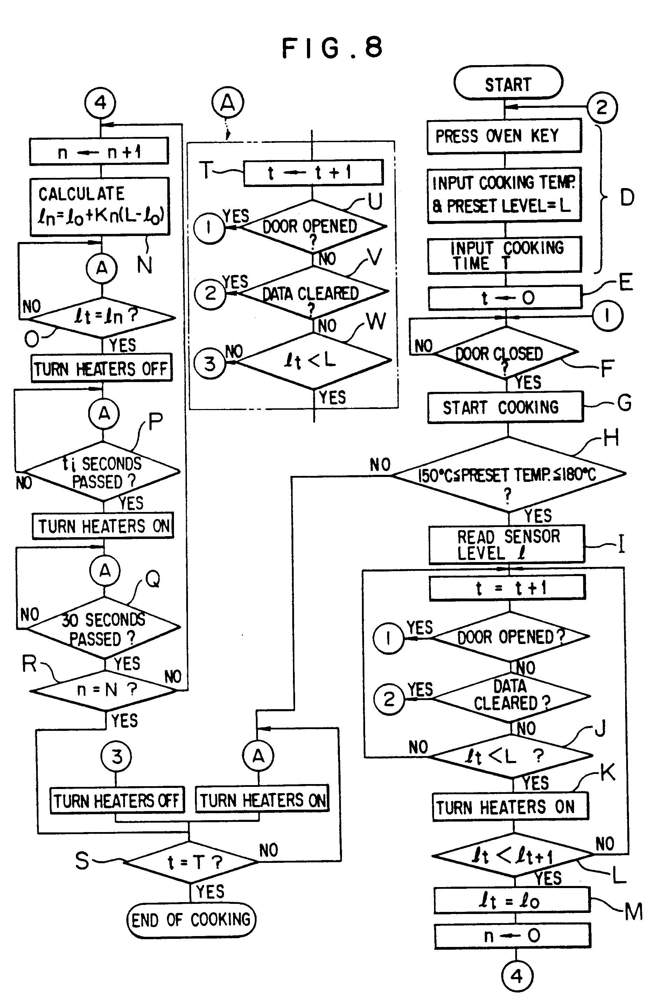

The control method according to the invention will now be described with reference to the flow chart shown in Fig. 8. A preset level L corresponding to a preset heating temperature and a preset time T are inputted by means of the oven keys 5, the temperature setting keys 6 and the timer volume 7 on the control panel 4 (step D). The time t is reset in response to the inputting of the preset time T (step E). The door 3 is closed (step F). The cooking start key is depressed to start the cooking (Step G). If the preset temperature is in the range 150 ° C < preset temperature ≦ 180 ° C, the control of the invention is started (step H). Upon starting, the sensor level ℓ of the thermistor 17 is read at intervals of 1 second (step I). At this time, if the sensor level ℓ is higher than the temperature adjusting level L, the heaters are not turned on until ℓ < L results (step J). When ℓ < L results, the heaters are turned on (step K). The level attained after the expiration of 1 second from this time instant is compared with the preceding level (step L). If the level after the expiration of 1 second is greater, the preceding level is set as to (step M). After the level to has been detected, a level ℓ₁, is computed from ℓ₁ = ℓ₀ + K₁•(L - ℓ₀) (step N). It is determined whether the level ℓ₁, is reached (step O). If it is, the heaters are turned off for tᵢ seconds (step P). At the expiration of ti seconds, the heaters are forcibly turned on for 30 seconds (step Q). This process is repeated three times (step R). After the process has been repeated three times, the cooking is completed upon reaching the preset time T (step S). When 150 ° C < preset temperature < 180 ° C, the control is effected according to the conventional method. During the control, the count- up is always effected (step T). If the door 3 is opened, a return is made to ① (step U). If the clear key 8' is depressed, a return is made to - (step V). If the thermistor level becomes ℓ > L, a transfer is made to ③ thereby performing the conventional control (step W). This process @ is performed at all times. However, when ℓ > L after the start of the cooking, no transfer is made to ③.

From the foregoing description it will be seen that in accordance with the invention, due to its feature that the heat sources are turned on and off through the microcomputer by utilizing the detected levels of the chamber temperature controlling sensor, not only the occurrence of any overshooting is eliminated but also the chamber temperature can be controlled as desired. For instance, it is possible to control the first half of the cooking at a low temperature and the latter half at a high temperature. Thus, the invention is very useful in that more sophisticated control is ensured for not only conventional ovens/ranges but also automatic cooking apparatus and the like.

## Claims

1. A method for cooking a food object (16) contained in a heating chamber (11) of a cooking apparatus comprising:
- heating the object (16)
- detecting a temperature and providing a signal having a level ℓ(t) corresponding to said temperature as a function of time t,
- interrupting heating for a period of time tₙ when said level ℓ (t) reaches a level ℓₙ n characterized in that
- said temperature is the cavity temperature of the heating chamber (11), which is heated by heat source means (15), ℓₙ is defined to be 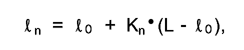 to being the lowest level of said signal after start of heating, L being a level corresponding to a preset heating temperature and Kₙ being a coefficient depending on the kind of object (11 ),
n is an integer, and
said period of time (tₙ) is preset.

2. The method according to Claim 1, characterized in that when said level ℓₙ is reached, said heating is interrupted for said preset period of time (tₙ) and then said heating is forcibly continued for another preset period of time (t').

3. The method according to any preceding claim, characterized in that a plurality of said coefficients Kₙ are provided in such a manner as (0.01 < K₁ < K₂ <... <Kₙ < 0.99).

4. The method according to any preceding claim, characterized in that said interruption of said heating due to said coefficient Kₙ is completed when said level ℓ(t) attains said preset heating temperature level L, and thereafter the cavity temperature of said heating chamber (11) is controlled in accordance with said preset heating temperature level L.

5. The method according to any preceding claim, characterized in that after the start of cooking, when said cooking is interrupted by the opening of a door (3) of said apparatus and cancellation thereof or when said preset heating temperature is changed and said cooking is restarted, said lowest level to is detected again.

6. The method according to any preceding claim, characterized in that after the start of cooking, when said level ℓ(t) is higher than said preset heating temperature level L, said lowest level to is detected after said heating has been started.

7. The method according to any preceding claim, characterized in that it is effected in a given range of a presettable range of temperature.

8. The method according to any preceding claim, characterized in that on a plurality of time passage characteristic curves of temperatures starting from different initial temperatures (ℓᵢ) detected in said heating chamber (11) after starting said heating, those points (ℓ₁) corresponding to said level (ℓ₍ₜ₎ at which the heating is interrupted for the first time are arranged at such positions that a line connecting said first interruption points (ℓ₁) is substantially represented by a linear function.

9. The method according to Claim 8, characterized in that those points (ℓ₂ and 1₃) of said characteristic curves at which the heating is interrupted for the second and third times, respectively, are arranged at such positions that lines respectively connecting said second- time and third-time interruption points (_{ℓ2} and 1₃) are each substantially represented by a linear function.

10. The method according to Claim 9, characterized in that each of said straight lines respectively connecting said points 1₂ and ℓ₃ for interrupting the heating for the second and third times, respectively, has a slope gentler than that of the preceding straight line.

11. A cooking apparatus for carrying out a method according to any preceding claim, comprising
a control section (4) including indicating means (9), means (5) for establishing heating conditions, means (6) for setting a heating temperature, means (7) for setting a heating time, said means (9, 5, 6, 7) being arranged on a front face of an apparatus body (1);
means (15) for heating said object (16) in said heating chamber (11);
a sensor (17) for detecting a temperature and providing a signal having a level ℓ₍ₜ₎ corresponding to said temperature as a function of time; and
a control circuit (10) responsive to said level ℓ₍ₜ₎ detected by said sensor (17) to control said heating of said object (16) by turning off said heat source (15) for a period of time tₙ, when said level ℓ₍ₜ₎ reaches a levels ℓₙ;
characterized in that
said means (15) for heating said object (16) is a heat source for heating cooking,
said sensor (17) is arranged to detect the cavity temperature of the heating chamber (11
said period of time tₙ is preset, and
said control circuit (10) determines said level ℓ n to be 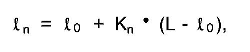 wherein to is the lowest level of said signal after start of heating, L is a level corresponding to a preset heating temperature, Kₙ is a coefficient depending on the kind of object (16), n is an integer.

## Patentansprüche

1. Verfahren zum Kochen eines in einer Heizkammer (11) eines Kochgerätes enthaltenen Nahrungsmittelgegenstandes (16), mit den Schritten:
- Erhitzen des Gegenstandes (16)
- Erfassen einer Temperatur und Bilden eines Signals, das einen der Temperatur als eine Funktion der Zeit t entsprechenden Pegel ℓ₍ₜ₎ aufweist,
- Unterbrechen des Heizens für eine Zeitspanne tₙ, wenn der Pegel ℓ₍ₜ₎ einen Pegel ℓ ₙ erreicht, dadurch gekennzeichnet, daß
- die Temperatur die Hohlraumtemperatur der Heizkammer (11) ist, welche durch eine Wärmequelleneinrichtung (15) beheizt wird, ℓₙ definiert ist als 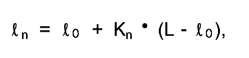
wobei to der niedrigste Pegel des Signals nach Start des Heizvorgangs, L ein einer vorbestimmten Heiztemperatur entsprechender Pegel und Kₙ ein von der Art des Gegenstandes (16) abhängiger Koeffizient ist,
n eine ganze Zahl ist, und
die Zeitspanne (tₙ) voreingestellt ist.

2. Verfahren nach Anspruch 1, dadurch gekennzeichnet, daß beim Erreichen des Pegels ℓ_{n n} das Heizen für die voreingestellte Zeitspanne (tₙ) unterbrochen und dann das Heizen zwangsläufig für eine weitere voreingestellte Zeitspanne (t') fortgesetzt wird.

3. Verfahren nach einem der vorhergehenden Ansprüche, dadurch gekennzeichnet, daß eine Mehrzahl der Koeffizienten Kₙ derart vorgesehen ist, daß (0,01 < K₁ < K₂ < ... < Kₙ < 0,99).

4. Verfahren nach einem der vorhergehenden Ansprüche, dadurch gekennzeichnet, daß das durch den Koeffizienten Kₙ verursachte Unterbrechen des Heizens beendet wird, wenn der Pegel ℓ(ₜ) den voreingestellten Heiztemperaturpegel L erreicht und danach die Hohlraumtemperatur der Heizkammer (11) gemäß dem voreingestellten Heiztemperaturpegel L gesteuert wird.

5. Verfahren nach einem der vorhergehenden Ansprüche, dadurch gekennzeichnet, daß nach dem Start des Kochvorgangs bei dessen Unterbrechung durch Öffnen einer Tür (3) des Geräts und dessen Löschung oder bei einer Änderung der voreingestellten Heiztemperatur und einem Neubeginn des Kochvorgangs der niedrigste Pegel to erneut erfaßt wird.

6. Verfahren nach einem der vorhergehenden Ansprüche, dadurch gekennzeichnet, daß der niedrigste Pegel to erfaßt wird, nachdem der Heizvorgang gestartet worden ist, falls beim Start des Kochvorgangs der Pegel ℓ₍ₜ₎ höher ist als der voreingestellte Heiztemperaturpegel L.

7. Verfahren nach einem der vorhergehenden Ansprüche, dadurch gekennzeichnet, daß es in einem gegebenen Bereich eines voreinstellbaren Temperaturbereichs ausgeführt wird.

8. Verfahren nach einem der vorhergehenden Ansprüche, dadurch gekennzeichnet, daß auf einer Mehrzahl von Zeitverlaufskennlinien der Temperaturen, die von verschiedenen in der Heizkammer (11) nach dem Start des Heizvorgangs erfaßten Anfangstemperaturen (ℓᵢ) ausgehen, die dem Pegel (ℓ₍ₜ₎), bei dem das Heizen erstmals unterbrochen wird, entsprechenden Punkte (ℓ₁) an solchen Stellen angeordnet sind, daß eine diese ersten Unterbrechungspunkte (ℓ₁) verbindende Linie im wesentlichen durch eine lineare Funktion dargestellt wird.

9. Verfahren nach Anspruch 8, dadurch gekennzeichnet, daß diejenigen Punkte (ℓ₂ und 1₃) der Kennlinien, an denen das Heizen zum zweiten bzw. dritten Mal unterbrochen wird, an solchen Stellen angeordnet sind, daß jeweils die die zweitmaligen bzw. drittmaligen Unterbrechungspunkte (ℓ₂ und 1₃) verbindenden Linien im wesentlichen durch eine lineare Funktion dargestellt werden.

10. Verfahren nach Anspruch 9, dadurch gekennzeichnet, daß jeweils jede der die zum Unterbrechen des Heizens zum zweiten bzw. dritten Mal dienenden Punkte ℓ₂ und ℓ₃ verbindenden geraden Linien eine schwächere Steigung aufweist als die vorhergehende gerade Linie.

11. Kochgerät zur Durchführung eines Verfahrens nach einem der vorhergehenden Ansprüche mit
einem eine Anzeigeeinrichtung (9), eine Einrichtung (5) zur Festlegung von Heizbedingungen, eine Einrichtung (6) zur Einstellung einer Heiztemperatur und eine Einrichtung (7) zur Einstellung einer Heizzeit aufweisenden Kontrollabschnitt (4), wobei die Einrichtungen (9, 5, 6, 7) an einer Vorderseite eines Gerätekörpers (1) angeordnet sind, einer Einrichtung (15) zum Erhitzen des Gegenstandes (16) in der Heizkammer (11),
einem Fühler (17) zur Erfassung einer Temperatur und Lieferung eines Signals, das einen der Temperatur als eine Funktion der Zeit entsprechenden Pegel ℓ₍ₜ₎ aufweist, und
einer auf den von dem Fühler (17) erfaßten Pegel ℓ₍ₜ₎ ansprechenden Steuerschaltung (10) zur Steuerung des Heizvorgangs des Gegenstandes (16) durch Abschalten der Heizquelle (15) für eine Zeitspanne tₙ, wenn der Pegel ℓ₍ₜ₎ einen Pegel ℓₙ erreicht,
dadurch gekennzeichnet, daß
die Einrichtung (15) zum Erhitzen des Gegenstandes (16) eine Wärmequelle für Erhitzungskochen ist,
der Fühler (17) zur Erfassung der Hohlraumtemperatur der Heizkammer (11) ausgebildet ist,
die Zeitspanne tₙ voreingestellt ist, und die Steuerschaltung (10) den Pegel ℓₙ gemäß 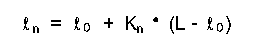 bestimmt, wobei to der niedrigste Pegel des Signals nach dem Start des Heizvorgangs, L ein einer voreingestellten Heiztemperatur entsprechender Pegel, Kₙ ein von der Art des Gegenstandes (16) abhängiger Koeffizient, n eine ganze Zahl ist.

## Revendications

1. Méthode de cuisson d'un objet alimentaire (16) contenu dans la chambre de chauffage (11) d'un appareil de cuisson, comprenant les étapes consistant
- à chauffer l'objet (16),
- à détecter une température et à produire un signal ayant un niveau I₍ₜ₎ correspondant à ladite température en fonction du temps t,
- à interrompre le chauffage pendant une période de temps tₙ lorsque ledit niveau I₍ₜ₎ atteint un niveau Iₙ, caractérise en ce que
- ladite température est la température de la cavité de la chambre de chauffage (11), qui est chauffée par une source de chaleur (15),
- Iₙ est défini par l'équation 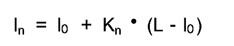 la étant le plus bas niveau dudit signal après le début du chauffage, L étant un niveau correspondant à une température de chauffage préréglée, Kₙ étant un coefficient dépendant de la nature de l'objet
(16) et n étant un nombre entier, et
- ladite période de temps (tₙ) est préréglée.

2. Méthode selon la revendication 1, caractérisée en ce que, lorsque ledit niveau Iₙ est atteint, le chauffage est interrompu pendant ladite période de temps préréglée (tₙ), puis le chauffage est poursuivi de force pendant une autre période de temps préréglée (t').

3. Méthode selon la revendication 1 ou 2, caractérisée en ce qu'une multiplicité desdits coefficients Kₙ est prévue, de telle manière que (0,01 < Ki < K₂ < ... < Kₙ < 0,99).

4. Méthode selon l'une quelconque des revendications 1 à 3, caractérisée en ce que ladite interruption du chauffage, subordonnée audit coefficient Kₙ, est achevée lorsque ledit niveau 1₍ₜ₎ atteint le niveau L de la température de chauffage préréglée, après quoi la température de la cavité de ladite chambre de chauffage (11) est commandée conformément audit niveau L de la température de chauffage préréglée.

5. Méthode selon l'une quelconque des revendications 1 à 4, caractérisée en ce qu'après le début de la cuisson, lorsque la cuisson est interrompue par l'ouverture de la porte (3) dudit appareil et par l'annulation de la cuisson, ou lorsque ladite température de chauffage préréglée est modifiée et que le chauffage est remis en marche, ledit niveau le plus bas la est détecté de nouveau.

6. Méthode selon l'une quelconque des revendications 1 à 5, caractérisée en ce qu'après le début de la cuisson, lorsque ledit niveau 1₍ₜ₎ est plus élevé que ledit niveau L de la température de chauffage préréglée, ledit niveau le plus bas lo est détecté après que le chauffage a été mis en marche.

7. Méthode selon l'une quelconque des revendications 1 à 6, caractérisée en ce qu'elle est appliquée dans une plage donnée d'une gamme de température préréglable.

8. Méthode selon l'une quelconque des revendications 1 à 7, caractérisée en ce que, sur une pluralité de courbes caractéristiques de température en fonction du temps, débutant a des températures initiales (lᵢ) différentes détectées dans ladite chambre de chauffage (11) après le début du chauffage, les points (I₁, ), correspondant audit niveau (I₍ₜ₎) auquel le chauffage est interrompu pour la première fois, sont situés dans des positions telles qu'une ligne reliant ces points (l₁, ) de première interruption est pratiquement représentée par une fonction linéaire.

9. Méthode selon la revendication 8, caractérisée en ce que les points (1₂ et 1₃) desdites courbes caractéristiques auxquels le chauffage est interrompu respectivement pour les deuxième et troisième fois sont situés dans des positions telles que des lignes reliant respectivement ces points (1₂ et 1₃) d'interruption pour la deuxième fois et la troisième fois sont essentiellement représentées chacune par une fonction linéaire.

10. Méthode selon la revendication 9, caractérisée en ce que chacune des droites reliant respectivement lesdits points (1₂ et 1₃) d'interruption du chauffage pour les deuxième et troisième fois, respectivement, a une pente plus douce que celle de la droite précédente.

11. Appareil de cuisson pour l'application de la méthode selon l'une quelconque des revendications 1 à 10, comprenant
une section de commande (4) contenant des moyens indicateurs (9), des moyens (5) pour l'établissement des conditions de chauffage, des moyens (6) pour le réglage d'une température de chauffage, des moyens (7) pour le réglage d'un temps de chauffage, lesdits moyens (9, 5, 6, 7) étant disposés sur un panneau frontal du corps de l'appareil (1),
des moyens (15) pour chauffer ledit objet (16) dans ladite chambre de chauffage (16), un détecteur (17) pour détecter une température et délivrer un signal ayant un niveau l₍ₜ₎ qui correspond à ladite température en fonction du temps, et
un circuit de commande (10) qui, en réponse audit niveau l₍ₜ₎ détecté par ledit détecteur (17), commande le chauffage dudit objet (16) en éteignant ladite source de chaleur (15) pendant une période de temps tₙ lorsqueledit niveau l₍ₜ₎ atteint un niveau Iₙ,
caractérisé en ce que
lesdits moyens (15) pour chauffer ledit objet (16) sont constitués par une source de chaleur pour la cuisson par chauffage,
ledit détecteur (17) est disposé de façon à détecter la température de la cavité de la chambre de chauffage (11),
ladite période de temps tₙ est préréglée, ledit circuit de commande (10) détermine ledit niveau Iₙ conformément à l'équation 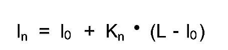
dans laquelle l0o est le plus bas niveau dudit signal après le début du chauffage, L est un niveau correspondant a une température de chauffage préréglée, Kₙ est un coefficient dépendant de la nature de l'objet (16) et n est un nombre entier.
